# EUROPEAN PATENT SPECIFICATION

(11) **EP 4 332 194 B1**
(45) Date of publication and mention of the grant of the patent: **02.07.2025**
(21) Application number: 22815907.5
(22) Date of filing: 24.05.2022
(51) Int. Cl.: C09J 111/00

(54) **CHIP, METHOD FOR MANUFACTURING CHIP, AND ADHESIVE COMPOSITION**
CHIP, VERFAHREN ZUR HERSTELLUNG EINES CHIPS UND KLEBSTOFFZUSAMMENSETZUNG
PUCE, PROCÉDÉ DE FABRICATION DE PUCE ET COMPOSITION ADHÉSIVE

(30) Priority: 31.05.2021 JP 2021091426
(43) Date of publication of application: 06.03.2024
(73) Proprietor: Denka Company Limited, Tokyo 103-8338 (JP)
(72) Inventor: NAGAOKA, Kota, Tokyo 103-8338 (JP); KUMAGAI, Yushi, Tokyo 103-8338 (JP)
(74) Representative: Gulde & Partner
(86) International application number: PCT/JP2022/021184
(87) International publication number: WO 2022/255157

(56) References cited:
- JP-A- 2001 019 923
- JP-A- 2009 191 182
- JP-A- 2012 111 862
- JP-A- 2012 111 862
- JP-A- 2012 188 618
- JP-A- 2013 177 504
- DATABASE WPI Week 201554, 17 July 2015 Derwent World Patents Index; AN 2015-43618D, XP002812181

## Description

### TECHNICAL FIELD

This invention relates to a chip comprising chloroprene-based polymer rubber, a method for producing the chip, and an adhesive composition.

### BACKGROUND ART

Chloroprene-based polymers are substance with excellent heat resistance, weather resistance, ozone resistance, chemical resistance, and flame resistance (self-extinguishing), and has many superior properties compared to natural rubber and other synthetic resins. With these overall well-balanced properties, chloroprene-based polymers are used in a variety of applications. A typical example of such applications is an adhesive composition.

The adhesive composition containing the chloroprene-based polymer rubber is prepared by dissolving the chloroprene-based polymer rubber in an organic solvent such as toluene or acetone and dissolving and/or dispersing the tackifying resin and metal oxide as necessary. The adhesive composition hardens and adheres when the organic solvent evaporates. The adhesive composition containing the chloroprene-based polymer rubber is used in a wide range of fields such as woodworking, furniture, and vehicles because they have excellent adhesive properties such as initial adhesive strength (see, for example, Patent Literatures 1 and 2).

In recent years, it has been desired to change the solvent used for the solvent-type adhesive to a non-aromatic solvent. However, with this change, during storage of the solvent-type adhesive, so-called layer separation, in which the solvent-type adhesive separates into components that are soluble in the organic solvent and components that are insoluble in the organic solvent, tends to occur.

As a technique related to a composition containing a chloroprene-based polymer with excellent layer separation stability, Patent Literature 3 discloses that a specific ethylenically unsaturated sulfonic acid or a salt thereof is copolymerized in a specific range when chloroprene is polymerized.

Further, Patent Literature 4 discloses a chloroprene rubber composition containing 0.005 to 10 parts by mass of at least one sulfonic acid compound having a specific structure with respect to 100 parts by mass of the chloroprene rubber.

Furthermore, Patent Literature 5 discloses an adhesive composition obtained by dissolving an unmodified chloroprene-based polymer A, obtained by polymerizing chloroprene alone or copolymerizing two or more monomers including chloroprene, and a sulfur modified chloroprene-based polymer B, obtained by polymerizing chloroprene alone or copolymerizing two or more monomers including chloroprene in the presence of sulfur, in an organic solvent.

### CITATION LIST

### PATENT LITERATURE

Patent Literature 1 JP-A-2003-226852
Patent Literature 2 JP-A-2005-008713
Patent Literature 3 JP-A-2007-177198
Patent Literature 4 JP-A-2010-275338
Patent Literature 5 JP-A-2012-111862

### SUMMARY OF INVENTION

### TECHNICAL PROBLEM

However, when conventional chloroprene-based polymer rubbers are stored under pressure in a high-temperature environment, they stick together (blocking) and deteriorates in handling. There was a problem in that it takes a long time to completely dissolve the chip and/or sheets containing the chloroprene-based polymer rubber in an organic solvent to obtain an adhesive composition. Furthermore, there is room for improvement in the layer separation resistance and brushability (brush coating properties) of the obtained adhesive composition, and furthermore, there is a problem that the adhesive composition is colored. It has been difficult to solve these problems simultaneously.

The present invention has been made in view of such circumstances and provides a chip having excellent blocking resistance and dissolving in an organic solvent in a short time, by which an adhesive composition that has excellent brushability and layer separation resistance, and is free from coloration can be obtained, a method for producing the chip, and an adhesive composition that has excellent brushability and layer separation resistance and little coloring.

### SOLUTION TO PROBLEM

According to the present invention, a chip for an adhesive composition, comprising a chloroprene-based polymer rubber, wherein:
a temperature near a center of the chip 60 seconds after the chip heated to 140°C is kept in a room at 23°C is less than 130°C;
time required for A_{X} to exceed A₀ + 20 is less than 500 minutes;

A₀ is a Type A durometer hardness measured in accordance with JIS K 6253-3 of a 6 mm thickness sheet, prepared by press molding the chip at 70°C, taken out from a mold and allowed to stand for 1 hour in a 23°C environment;

A_{X} is a Type A durometer hardness after X minutes of placing the 6 mm thick sheet in a thermostatic chamber at -10°C,
is provided.

The present inventors have made intensive studies and found that in the production of the chip containing the chloroprene-based polymer rubber, by highly controlling the production conditions to reduce heat storage in the chip and to adjust a time required for a hardness of the chip to change by a specified amount, which is measured under specified conditions, (crystallization time) to a specified range, the obtained chip can have excellent blocking resistance and dissolve in an organic solvent in a short time, and by the chip, an adhesive composition having excellent brushability and layer separation resistance and little coloring can be obtain, and completing the present invention.

According to another aspect of the present invention, a method for producing the chip, comprising separation step and molding step, wherein:
in the separation step, by adding a coagulant to a chloroprene-based polymer latex containing the chloroprene-based polymer rubber, the chloroprene-based polymer rubber is separated from the chloroprene-based polymer latex and obtain a composition containing the chloroprene-based polymer rubber by adding to;
in the molding step, the composition containing the chloroprene-based polymer rubber is molded by an extruder to obtain the chip containing the chloroprene-based polymer rubber,
in the molding step, the temperature of the chip containing the chloroprene-based polymer rubber immediately after discharge is less than 150°C
is provided.

According to another aspect of the present invention, an adhesive composition containing a solution of the chip dissolved in an organic solvent.

Various embodiments of the present invention are illustrated below. The embodiments shown below can be combined with each other.
(1) A chip for an adhesive composition, comprising a chloroprene-based polymer rubber, wherein:
   a temperature near a center of the chip 60 seconds after the chip heated to 140°C is kept in a room at 23°C is less than 130°C;
   time required for A_{X} to exceed A₀ + 20 is less than 500 minutes;
   A₀ is a Type A durometer hardness measured in accordance with JIS K 6253-3 of a 6 mm thickness sheet, prepared by press molding the chip at 70°C, taken out from a mold and allowed to stand for 1 hour in a 23°C environment;
   A_{X} is a Type A durometer hardness after X minutes of placing the 6 mm thick sheet in a thermostatic chamber at -10°C.
(2) The chip of (1), wherein:
   when a toluene solution of 10% by mass of the chloroprene-based polymer rubber is prepared by dissolving the chip in toluene, a glass tube with an inner diameter of 6 mm and an outer diameter of 8 mm is put 30 mm into the toluene solution of 10% by mass of the chloroprene-based polymer rubber adjusted to 20°C and the toluene solution is stirred with the glass tube at 2000 rpm for 30 seconds, difference between H₀ and H₁ is 10 mm or less;
   H₁ is the highest liquid level height on the inside of the glass tube; and
   H₀ is the lowest liquid level height on the outside of the glass tube.
(3) The chip of (1) or (2), wherein when a toluene solution of 5% by mass of the chloroprene-based polymer rubber is prepared by dissolving the chip in toluene, an absorbance of the toluene solution of 5% by mass of the chloroprene-based polymer rubber at a wavelength of 440 nm is less than 0.30.
(4) The chip of any one of (1) to (3), wherein when 100 g of the chip is dissolved in 400 g of an organic solvent that is cyclohexane: ethyl acetate = 1:1 (mass ratio) at 23°C, the time until 100g of the chip dissolves in the organic solvent is 300 minutes or less.
(5) The chip of any one of (1) to (4), wherein a total content of alkaline earth metals, magnesium, aluminum and zinc in the chip is 1 to 5000 mg/kg.
(6) A method for producing the chip of any one of (1) to (5), comprising a separation step and a molding step, wherein:
   in the separation step, by adding a coagulant to a chloroprene-based polymer latex containing the chloroprene-based polymer rubber, the chloroprene-based polymer rubber is separated from the chloroprene-based polymer latex to obtain a composition containing the chloroprene-based polymer rubber;
   in the molding step, the composition containing the chloroprene-based polymer rubber is molded by an extruder to obtain the chip containing the chloroprene-based polymer rubber,
   in the molding step, the temperature of the chip containing the chloroprene-based polymer rubber immediately after discharge is less than 150°C.
(7) The method for producing of (6), wherein in the molding step, a temperature of the chip containing the chloroprene-based polymer rubber after 60 seconds of discharge is 130°C or less.
(8) The method for producing of (6) or (7), wherein:
   in the molding step, a temperature of a die head is set to 120°C or less;
   Y/Z is set to 1 to 10;
   Y (mm/min) is a discharge speed of the chloroprene-based polymer rubber at the die head (mm/min); and
   Z (rpm) is a rotation speed of a cutting blade that cuts the chloroprene-based polymer rubber to be discharged.
(9) The method for producing of any one of (6) to (8), wherein the method does not include a step of water cooling the chip after the molding step.
(10) The method for producing of any one of (6) to (9), further comprising a drying step, wherein in the drying step, water is removed from the composition containing the chloroprene-based polymer rubber separated in the separation step, and the atmospheric temperature in the drying step is 130°C or less.
(11) The method for producing of (10), wherein the separation step, the drying step, and the molding step are carried out in the extruder.
(12) An adhesive composition containing a solution of the chip of any one of (1) to (5) dissolved in an organic solvent.

### EFFECTS OF THE INVENTION

According to the chip of the present invention, by reducing heat storage in the chip and to adjust a time required for a hardness of the chip to change by a specified amount, which is measured under specified conditions, (crystallization time) to a specified range, the chip can have excellent blocking resistance and dissolves in an organic solvent in a short time. The chip also make it possible to obtain an adhesive composition with excellent brushability and layer separation resistance and little coloration.

### BRIEF DESCRIPTION OF THE DRAWINGS

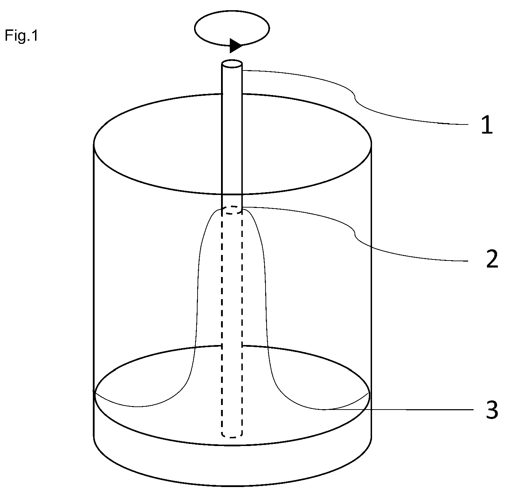

Fig.1 is a schematic diagram illustrating the method of measuring a tliquid level height inside a glass tube when stirring a toluene solution.

### DESCRIPTION OF EMBODIMENTS

Hereinafter, the present invention will be described in detail by exemplifying embodiments of the present invention. The present invention is not limited by these descriptions. Various features of embodiments of the invention described below can be combined with each other. In addition, the invention is established independently for each feature.

### 1. Chloroprene-based Polymer Rubber

The chip according to the present invention includes chloroprene-based polymer rubber. The chloroprene-based polymer rubber according to the present invention also includes chloroprene-based polymer. The chloroprene-based polymer is a homopolymer of 2-chloro-1,3-butadiene (hereinafter referred to as chloroprene) or a copolymer of a chloroprene monomer and other monomers that can be copolymerized therewith.

Examples of the monomer copolymerizable with chloroprene monomer include 2,3-dichloro-1,3-butadiene, 1-chloro-1,3-butadiene, butadiene, isoprene, styrene, acrylonitrile, acrylic acids or esters thereof, methacrylic acids, esters thereof, and the like. These can be used alone, or two or more of these can be used in combination. Although it is not particularly limited, from the viewpoint of maintaining the properties derived from chloroprene, adjusting the crystallinity of the polymer, and setting the crystallization time within a specific range, the chloroprene-based polymer according to one embodiment of the present invention preferably has 70% by mass or more, more preferably 80% by mass or more, and even more preferably 90% by mass or more of the monomer units derived from chloroprene with respect to 100% by mass of the chloroprene-based polymer.

### 2. Chip Comprising Chloroprene-based Polymer Rubber

The chip according to the present invention comprises the chloroprene-based polymer rubber. The chip according to the present invention have a specific range of heat storage property and crystallization time.

### <Heat Storage>

A temperature near a center of the chip 60 seconds after the chip heated to 140°C is kept in a room at 23°C is less than 130°C. In the chip according to the present invention, the temperature near the center of the chip 60 seconds after the chip heated to 140°C is kept in a room at 23°C is, for example, 50, 55, 60, 65, 70, 75, 80, 85, 90, 95, 100, 105, 110, 115, 120, 125, 130°C, and may be in the range between the two values exemplified herein.

Here, a temperature near a center of the chip 60 seconds after the chip heated to 140°C is kept in a room at 23°C can be measured by the following procedure.

First, a K type thermocouple is inserted into the chip so that the tip is near the center of the chip, then the chip is put in an oven set at 150°C and heated until the temperature near the center reaches 140°C. After the temperature near the center of the chip reaches 140°C, the chip is taken out into an environment of 23°C, and the temperature near the center of the chip is measured over time. During this time, it is preferable to hold the chip in air so that the surface of the chip does not come into contact with other objects. The temperature near the center of the chip 60 seconds after being taken out into the 23°C environment is defined as "the temperature near the center of the chip 60 seconds after the chip heated to 140°C is kept in a room at 23°C".

It is preferable that the tip of the thermocouple is inserted at least at a point closer to the center of the chip than the chip surface, that is, inserted into the interior of the chip.

The distance between the tip of the thermocouple and a plane, passing through the midpoint of the thickness and perpendicular to the thickness direction, is preferably 40% or less, preferably 30% or less, and 20% or less of the thickness.

The distance between the tip of the thermocouple and a plane, parallel to the thickness direction including the minor axis is preferably 30% or less, preferably 20% or less, and preferably 10% or less of the major axis.

The distance between the tip of the thermocouple and a plane parallel to the thickness direction including the major axis is preferably 30% or less, preferably 20% or less, and preferably 10% or less of the minor axis.

The above temperature can be adjusted by highly controlling the chip production conditions, especially the type and amount of blending in the chloroprene-based polymer latex production, and the molding conditions of the chip, and controlling the composition, specific heat, specific surface area, and shape of the chip.

### <Crystallization Time>

In the chip according to the present invention, time required for A_{X} to exceed A₀ + 20 is less than 500 minutes, when A₀ is a Type A durometer hardness measured in accordance with JIS K 6253-3 of a 6 mm thickness sheet, prepared by press molding the chip at 70°C, taken out from the mold and allowed to stand for 1 hour in a 23°C environment, and A_{X} is a Type A durometer hardness after X minutes of placing the 6 mm thick sheet in a thermostatic chamber at -10°C.

In this specification, the above-mentioned "time required for A_{X} to exceed A₀ + 20" is also referred to as crystallization time. The chip according to the present invention has a crystallization time of, for example, 1, 2, 3, 4, 5, 6, 7, 8, 9, 10, 15, 20, 25, 30, 40, 50, 60, 70, 80, 90, 100, 150, 200, 250, 300, 350, 400, 450, 500 minutes, and may be in the range between the two values exemplified herein.

Here, the crystallization time can be measured by the following procedure.

### (Preparation of Sheet for Hardness Measurement)

First, a sheet for hardness measurement is produced. As one example, the sheet can be produced by the following procedure.

The chips are processed into a sheet shape with a thickness of 3 mm using an 8-inch diameter roll (surface temperature: 30° C). Three of these sheets are stacked in a mold of 6 mm deep x 130 mm long x 25 mm wide so that the long direction is the grain direction of the roll ("the grain direction of the roll" refers to the direction along the circumference of the roll when the chips are processed into a sheet shape with a roll) and pressed at 70°C for 20 minutes. It is preferable that the sample taken out from the mold is left for one hour in a 23°C environment. In addition, it is preferable to measure A₀, which will be described later, immediately after allowed to stand for one hour. A₀ is more preferably measured within 1 hour after at least 1 hour of standing time and preferably within 30 minutes after at least 1 hour of standing time.

### (Measurement of hardness before being placed in a -10°C environment)

The hardness of the sheet after allowed to stand is measured using a Type A durometer based on JIS K 6253-3, and the Type A durometer hardness at this time is defined as A₀. A₀ indicates the hardness before being placed in a -10°C environment.

### (Calculation of Time Required for Hardness to Exceed A₀+20 at -10°C (crystallization time))

Next, the time required for the hardness to exceed A₀+20 is determined. Specifically, the sample is placed in a -10° C low temperature thermostatic chamber, and the hardness is measured using a Type A durometer in the low temperature thermostatic chamber at regular intervals. It is preferable that the sample is placed in a -10°C low temperature thermostatic chamber within 1 hour after the above-mentioned 1-hour standing period ends, and more preferably, it is placed in a -10°C low temperature thermostatic chamber within 30 minutes after the above-mentioned 1-hour standing period ends. Here, A_{X} is the Type A durometer hardness X minutes after placing the sample in a thermostatic chamber, and the time required for A_{X} to exceed A₀+20 is determined. The time required for A_{X} to exceed A₀+20 is defined as crystallization time.

It is preferable that the hardness measurement using a durometer is carried out three times at different measurement locations, and the average value of the instantaneous values is recorded. Here, the instantaneous value indicates the hardness value at the moment when the durometer needle is pressed against the sample.

The crystallization time can be adjusted by controlling the chip production conditions, the type and amount of blending in the production of the chloroprene-based polymer latex, especially the type and amount of monomer used in polymerization, the polymerization conditions, and the thermal history throughout the entire process, and controlling the degree of branching of the polymer in the resulting chip.

According to the conventional technology, since it was difficult to obtain a chip that simultaneously satisfies properties such as blocking resistance, brushability, and coloration, which worsen as the thermal history increases and the degree of polymer branching increases, and properties such as layer separation resistance, which improves as the degree of polymer branching increases, it was difficult to obtain a chip that excels in all of these properties.

However, according to the present invention, by appropriately controlling the heat storage property and crystallization time, it is possible to obtain the chip having excellent blocking resistance and dissolving in an organic solvent in a short time, by which an adhesive composition that has excellent brushability and layer separation resistance, and little coloring can be obtained.

### <Shape>

The chip according to one embodiment of the present invention preferably has a scale shape. The thickness of the chip according to one embodiment of the present invention is preferably 10 mm or less, and preferably 7 mm or less. The thickness is, for example, 1, 2, 3, 4, 5, 6, 7, 8, 9, 10 mm, and may be within the range between any two of the numerical values exemplified here.

The chip according to one embodiment of the present invention preferably has a major axis of 50 mm or less, and preferably 45 mm or less. The major axis is, for example, 10, 15, 20, 25, 30, 35, 40, 45, 50 mm, and may be within the range between any two of the numerical values exemplified here.

The chip according to one embodiment of the present invention preferably has a minor axis of 22 mm or less, and preferably 20 mm or less. The minor axis is, for example, 10, 12, 14, 16, 18, 20, 22 mm, and may be within the range between any two of the numerical values exemplified here.

Moreover, the short axis can be defined as the maximum length in the direction perpendicular to the long axis.

By having the above-mentioned shape, it is easy to obtain the chip having the above-mentioned heat storage property.

The shape of the chip can be adjusted by appropriately controlling the chip production conditions, especially the die shape in chip molding, the number of cutting blades, rotation speed of cutting blades, discharge speed, die head temperature, and the ratio of the discharge speed to the rotation speed of the cutting blade.

### <Liquid Level Height Inside Glass Tube When Stirring Toluene Solution (Brushability)>

When a toluene solution of 10% by mass of the chloroprene-based polymer rubber is prepared by dissolving the chip according to one embodiment of the present invention in toluene, a glass tube with an inner diameter of 6 mm and an outer diameter of 8 mm is put 30 mm into the toluene solution of 10% by mass of the chloroprene-based polymer rubber adjusted to 20°C and the toluene solution is stirred with the glass tube at 2000 rpm for 30 seconds, difference between H₀ and H₁ is preferably 10 mm or less, wherein H₁ is the highest liquid level height on the inside of the glass tube; and H₀ is the lowest liquid level height on the outside of the glass tube.

As shown in Fig. 1, when a glass tube put in a toluene solution is rotated, the liquid level inside and around the glass tube rises, and the liquid level outside, away from the glass tube, drops slightly lower than when it is not rotated. In this specification, when the glass tube is rotated at 2000 rpm for 30 seconds, the highest liquid level height on the inside of the glass tube is H₁ and the lowest liquid level height on the outside of the glass tube is H₀.

In this specification, the "difference between the lowest liquid level height on the outside of the glass tube H₀ and the highest liquid level height on the inside of the glass tube Hi" when the toluene solution is stirred with the glass tube is also referred to as "the liquid level height inside the glass tube when stirring the toluene solution". Specifically, the liquid level height inside the glass tube when stirring the toluene solution is, for example, 1, 2, 3, 4, 5, 6, 7, 8, 9, 10 mm, and may be in the range between the two values exemplified herein.

Specifically, the liquid level height inside the glass tube when stirring the toluene solution can be evaluated by the method described in Examples.

The liquid level height inside the glass tube when stirring the toluene solution is thought to be related to the structure of the chloroprene-based polymer contained in the chip, specifically, the amount of linear polymer and the amount of branched polymer. It is considered that the lower the degree of branching of the polymer, the lower the liquid level height inside the glass tube when stirring the toluene solution.

The liquid level height inside the glass tube when stirring the toluene solution is adjusted by adjusting the chip production conditions, especially the polymerization temperature and degree of polymerization, and by appropriately controlling the thermal history of the chloroprene-based polymer in the chloroprene-based polymer latex production process and the chip production process, and the heat storage property of the chip. For example, when the polymerization temperature and degree of polymerization are lowered, the degree of branching of the polymer decreases, and the liquid level height inside the glass tube when stirring the toluene solution tends to decrease.

The phenomenon in which the liquid level of the toluene solution rises is due to the Weissenberg effect, and the higher the liquid level height inside the glass tube when stirring the toluene solution, the worse the brushability. Poor brushability means that the viscosity of the adhesive is high, and it becomes wavy during application, making it impossible to apply the adhesive with a uniform thickness.

By controlling the liquid level height inside the glass tube when stirring the toluene solution to be less than or equal to the above-mentioned value, the brushability becomes even better.

### <Yellowness>

In the chip according to one embodiment of the present invention, when a toluene solution of 5% by mass of the chloroprene-based polymer rubber is prepared by dissolving the chip in toluene, an absorbance of the toluene solution of 5% by mass of the chloroprene-based polymer rubber at a wavelength of 440 nm is preferably less than 0.30. Specifically, the absorbance is, for example, 0.01, 0.03, 0.05, 0.10, 0.15, 0.20, 0.25, 0.30, and may be in the range between the two values exemplified herein.

Specifically, the absorbance can be evaluated by the method described in Examples.

The above absorbance is thought to be related to the amount of conjugated double bonds in the chloroprene-based polymer rubber, and can be adjusted by appropriately controlling the chip production conditions, particularly the thermal history of the chloroprene-based polymer in the chloroprene-based polymer latex production process and the chip production process, and the heat storage property of the chip.

### <Solubility in Organic Solvent>

In the chip according to one embodiment of the present invention, when 100 g of the chip is dissolved in 400 g of an organic solvent that is cyclohexane: ethyl acetate = 1:1 (mass ratio) at 23°C, the time until 100g of the chip dissolves in the organic solvent is preferably 300 minutes or less. Specifically, the above dissolution time is, for example, 30, 40, 50, 60, 70, 80, 90, 100, 110, 120, 130, 140, 150, 160, 170, 180, 190, 200, 210, 220, 230, 240, 250, 260, 270, 280, 290, 300 minutes, may be in the range between the two values exemplified herein.

The above dissolution time can be specifically evaluated by the method described in Examples.

The above dissolution time can be adjusted by highly controlling the chip production conditions, particularly the type and amount of blending in producing the chloroprene-based polymer latex, and the chip molding conditions, and controlling the chip components, specific surface area, shape, and the like.

Since the chip according to one embodiment of the present invention has excellent solubility in organic solvents, an adhesive composition and the like can be prepared in a short time, and productivity can be improved.

### <Total Content of Alkaline Earth Metals, Magnesium, Aluminum and Zinc>

A total content of alkaline earth metals, magnesium, aluminum, and zinc of the chip according to one embodiment of the present invention is preferably 1 to 5000 mg/kg.

Specifically, the total content of alkaline earth metals, magnesium, aluminum and zinc is, for example, 1, 10, 50, 100, 200, 300, 400, 500, 600, 700, 800, 900, 1000, 1500, 2000, 2500, 3000, 3500, 4000, 4500, 5000 mg/kg, and may be in the range between the two values exemplified herein.

The content of alkaline earth metals, magnesium, aluminum, and zinc can be measured, for example, by high frequency inductively coupled plasma optical emission spectroscopy (ICP-OES).

Specifically, first, the chip is cut into pieces of 5 mm square or less using scissors. 0.5 g of the cut sample is weighed out, 8 mL of nitric acid was added, and the sample is decomposed and dissolved using a microwave decomposition device. After the obtained decomposition liquid is cooled, the volume can be fixed to 25 mL, and measurement can be carried out using a high frequency inductively coupled plasma emission spectrometer.

The contents of alkaline earth metals, magnesium, aluminum and zinc can be adjusted by controlling the chip production conditions, particularly the type and amount of coagulant used during coagulation of the chloroprene-based polymer rubber.

The above chip can be suitably used for adhesive composition. Since the chip have excellent blocking resistance, they rarely stick to each other and have good handling properties during production of the adhesive composition. Moreover, it can be dissolved in an organic solvent in a short time, and an adhesive composition can be obtained in a short time. Further, the resulting adhesive composition has excellent brushability and layer separation resistance and has little coloring.

### 3. Method for Producing Chip Comprising Chloroprene-based Polymer Rubber

The method for producing the chip comprising the chloroprene-based polymer rubber according to the present invention is not particularly limited. The method for producing according to one embodiment of the present invention comprises a separation step and a molding step, wherein:
in the separation step, by adding a coagulant to a chloroprene-based polymer latex containing the chloroprene-based polymer rubber, the chloroprene-based polymer rubber is separated from the chloroprene-based polymer latex and obtain a composition containing the chloroprene-based polymer rubber;
in the molding step, the composition containing the chloroprene-based polymer rubber is molded by an extruder to obtain the chip containing the chloroprene-based polymer rubber.

Further, the method for producing according to one embodiment of the present invention may comprise an emulsion polymerization step before the separation step, wherein in the emulsion polymerization step, monomers containing chloroprene monomer is emulsion polymerized to obtain the chloroprene-based polymer latex containing the chloroprene-based polymer rubber.

### 3.1 Emulsion Polymerization Step

In the emulsion polymerization step according to one embodiment of the present invention, chloroprene monomer, or chloroprene monomer and other monomer copolymerizable with chloroprene monomer are emulsified and polymerized by using an emulsifiers, an dispersing agent, a polymerization initiator, a chain transfer agent, and the like as appropriate, and when the desired polymerization rate is reached, a polymerization terminator may be added to obtain the chloroprene-based polymer latex. Unreacted monomer can be removed from the chloroprene-based polymer latex obtained in this way by steam flash method, concentration method, and the like.

### <Emulsifier and Dispersant>

The emulsifier is not particularly limited, and known anionic, nonionic, and cationic emulsifiers used in the polymerization of the chloroprene-based polymer can be used.

The examples of the anionic emulsifier include carboxylic acid type, sulfonic acid type, sulfuric acid ester type, and the like, such as higher fatty acid salts, alkenyl succinates, alkali metal salts of rosin acid, and alkyl sulfonates having 8 to 20 carbon atoms, alkylaryl sulfate, condensates of sodium naphthalene sulfonate and formaldehyde, and the like.

The examples of the nonionic emulsifier include polyvinyl alcohol or copolymers thereof (for example, copolymers with acrylamide), polyvinyl ether or copolymers thereof (for example, copolymers with maleic acid), polyvinylpyrrolidone or copolymers thereof (for example, a copolymer with vinyl acetate), chemically modified versions of these (co)polymers, and cellulose derivatives (hydroxyethyl cellulose).

Examples of cationic emulsifiers include aliphatic amine salts and aliphatic quaternary ammonium salts, such as octadecyltrimethylammonium chloride, dodecyltrimethylammonium chloride, dilauryldimethylammonium chloride, and the like.

Among these, the emulsifier preferably contains rosin acid or alkali metal salts of rosin acid.

These may be used alone or in combination of two or more.

The amount of the emulsifier can be 2.0 to 7.5 parts by mass with respect to 100 parts by mass of the monomer.

### <pH Adjuster>

The raw materials added to the polymerization system at the start of polymerization can include a pH adjuster. Examples of the pH adjuster include potassium pyrosulfite, potassium sulfite, potassium hydrogen sulfite, potassium phosphate, potassium hydrogen phosphate, sodium pyrosulfite, sodium sulfite, sodium hydrogen sulfite, sodium phosphate, sodium hydrogen phosphate, potassium hydroxide, sodium hydroxide, and the like. These pH adjusters may be used alone or in combination of two or more.

Among these pH adjusters, it is preferable to use potassium hydroxide or sodium hydroxide because they are highly effective in increasing the pH value.
The amount of the pH adjuster added can be 0.01 to 2.0 parts by mass with respect to 100 parts by mass of the monomer.

### <Polymerization Initiator>

The raw materials added to the polymerization system at the start of polymerization can include a polymerization initiator. As the polymerization initiator, potassium persulfate, benzoyl peroxide, ammonium persulfate, hydrogen peroxide, and the like, which is used in normal radical polymerization, can be used.

The amount of the polymerization initiator added can be 0.001 to 1 part by mass with respect to 100 parts by mass of the monomer.

### <Chain Transfer Agent>

The chain transfer agent is not particularly limited as long as it is commonly used in the production of the chloroprene-based polymer, and examples of the chain transfer agent include long-chain alkyl mercaptans such as n-dodecyl mercaptan, tert-dodecyl mercaptan, and n-octyl mercaptan, dialkylxanthogen disulfides such as diisopropylxanthogen disulfide and diethylxanthogen disulfide, iodoform, and other known chain transfer agents.

The amount of the chain transfer agent added can be 0.001 to 10 parts by mass based on 100 parts by mass of the total monomers.

### <Polymerization Temperature>

The polymerization temperature is preferably in the range of 0 to 55°C from the viewpoint of easy control of reaction. From the viewpoint of smoother and safer polymerization reaction, it is desirable to set the lower limit of the polymerization temperature to 5°C or higher and upper limit of the polymerization temperature to 45°C or lower, more preferably 40°C, and even more preferably 35°C respectively. By adjusting the polymerization temperature, the degree of branching of the resulting chloroprene-based polymer rubber can be adjusted and the crystallization time of the resulting chip can be controlled.

### <Polymerization rate>

In the emulsion polymerization step, when a desired polymerization rate is reached, the polymerization can be stopped by adding a polymerization terminator to obtain a polymerized liquid in which the reaction has been completed. The polymerization rate at the end of polymerization can be less than 100% and can be 60 to 95%.

### <Polymerization Terminator >

Examples of the polymerization terminator include thiodiphenylamine, 4-tert-butyl catechol, 2,2'-methylenebis-4-methyl-6-tert-butylphenol, and the like.

### <Removal of Unreacted Monomer>

Unreacted monomer after emulsion polymerization is removed from the polymerized liquid by steam stripping method, reduced-pressure heat evaporation method, or other conventional methods to obtain chloroprene-based polymer latex.

### 3.2 Separation Step

The method for producing according to one embodiment of the present invention may comprise a separation step in which, by adding a coagulant to the chloroprene-based polymer latex containing the chloroprene-based polymer rubber obtained in the emulsion polymerization step, the chloroprene-based polymer rubber is separated from the chloroprene-based polymer latex and obtain a composition containing the chloroprene-based polymer rubber;

In the separation step, it is preferable to separate the chloroprene-based polymer rubber by adding a coagulant to the chloroprene-based polymer latex obtained in the emulsion polymerization step. Generally, the method of separating the chloroprene-based polymer rubber from the chloroprene-based polymer latex is to break the emulsification using a freezing roll, but the method using a freezing roll has the problem of poor energy efficiency. Furthermore, the method using freezing rolls is often carried out in an open system, which poses the problem of a poor working environment. In the method for producing according to one embodiment of the present invention, the energy efficiency of the process can be improved by separating the chloroprene-based polymer rubber using a coagulant without using a freezing roll. Further, in the method for producing according to one embodiment of the present invention, the separation step can be carried out in an extruder, more preferably the separation step and the drying step can be carried out in an extruder, and still more preferably the separation step, drying step, and molding step can be carried out in an extruder, which can improve the working environment. The expression "carrying out the molding step in an extruder" also includes a case in which a part of the molding step is carried out in the extruder.

The coagulant is preferably an aqueous solution containing at least one of the group consisting of alkaline earth metal salts, magnesium salts, aluminum salts, and zinc salts, and is more preferably an aqueous solution containing at least one of the group consisting of chlorides, sulfates, nitrates, and phosphates of calcium, magnesium, magnesium, aluminum. Of these, the coagulant is more preferably an aqueous solution containing at least one of the group consisting of calcium chloride, magnesium chloride, magnesium sulfate, aluminum chloride, and aluminum sulfate.

The coagulant may be preferably added so that the total of alkaline earth metal salts, magnesium salts, aluminum salts, and zinc salts is 0.05 to 10 parts by mass with respect to 100 parts by mass of chloroprene-based polymer latex.

By setting the total of alkaline earth metal salts, magnesium salts, aluminum salts, and zinc salts equal to or greater than the lower limit above, sufficient solidification can be achieved and sufficient recovery can be obtained. Also, by setting the total of alkaline earth metal salts, magnesium salts, aluminum salts, and zinc salts equal to or lower than the upper limit above, the production cost can be reduced.

The chloroprene-based polymer latex and coagulant can be mixed with a screw in the extruder. The mixing conditions are preferably adjusted appropriately so that the chloroprene-based polymer latex and coagulant are sufficiently mixed.

As one example, the screw outer diameter can be 20 to 120 mm, specifically, for example, 20, 30, 40, 50, 60, 70, 80, 90, 100, 110, 120 mm, and may be in the range between the two values exemplified herein.

The ratio L/D of screw length (L) to diameter (D) can be 40 to 80, specifically, for example, 40, 45, 50, 55, 60, 65, 70, 75, 80, and may be in the range between the two values exemplified herein.

The screw rotation speed can be 30 to 160 rpm, specifically, for example, 30, 40, 50, 60, 70, 80, 90, 100, 110, 120, 130, 140, 150, 160 rpm, and may be in the range between the two values exemplified herein.

When the amount of the chloroprene-based polymer latex supplied is 100 parts by mass/hour, the amount of the coagulant supplied can be 10 to 200 parts by mass/hour, and specifically, for example, 10, 20, 30, 40, 50, 60, 70, 80, 90, 100, 110, 120, 130, 140, 150, 160, 170, 180, 190, 200 parts by mass/hour, and may be in the range between the two values exemplified herein.

By setting each of the above conditions within the above numerical ranges, it is possible to suppress shear heat generation due to the screw, and suppress deterioration of the chloroprene-based polymer rubber, and it is more easy to obtaint a chip having excellent blocking resistance, by which an adhesive composition that has excellent brushability and layer separation resistance, and is free from coloration can be obtained. Further, by setting the above conditions within the above numerical ranges, the chloroprene-based polymer latex and coagulant are more sufficiently mixed, and the chloroprene-based polymer rubber can be separated more efficiently.

The coagulated chloroprene-based polymer rubber is separated from the suspension containing the coagulate, and then preferably dehydrated in a dehydration device to obtain a composition containing the chloroprene-based polymer rubber. Examples of the dehydration device include known dehydration devices such as slits, strainers, and dehydration rolls.

The method for producing according to one embodiment of the present invention can further include a drying step, wherein in the drying step, water is removed from the composition containing the chloroprene-based polymer rubber separated in the separation step.

In the drying step, the atmospheric temperature is preferably 130°C or lower. Specifically, the temperature of the drying step is, for example, 30, 40, 50, 60, 70, 80, 90, 100, 110, 120, 130°C, and may be in the range between the two values exemplified herein.

The drying step is preferably within 10 minutes.

The drying step preferably includes a high temperature drying step of heating at 100°C or higher and a low temperature drying step of heating at less than 100°C.

In the high temperature drying step, the atmospheric temperature can be, for example, 100, 110, 120, 130° C, and may be in the range between the two values exemplified herein. The high temperature drying step is preferably carried out within 3 minutes.

In the low temperature drying step, the atmospheric temperature is specifically, for example, 30, 40, 50, 60, 70, 80, 90, 100°C, and may be in the range between the two values exemplified herein.

The low temperature drying step is preferably carried out within 7 minutes.

In one embodiment according to the present invention, the drying step preferably includes the low temperature drying step after the high temperature drying step. By including the low temperature drying step after the high-temperature drying step, in the first half, where there is more water and is affected by the cooling effect due to latent heat, drying can be carried out at a high temperature, and in the second half, where there is less water and is less affected by the cooling effect due to latent heat, drying can be carried out at a low temperature. This makes it possible to suppress changes in the chip due to heat.

### 3.3 Molding Step

The method for producing according to one embodiment of the present invention can comprise a molding step, in which the composition containing the chloroprene-based polymer rubber is molded by an extruder to obtain the chip containing the chloroprene-based polymer rubber. The molding step can use, for example, a side hot-cut method, center hot-cut method, and the like.

In the molding step, the temperature of the chip containing the chloroprene-based polymer rubber immediately after discharge is preferably less than 150°C. The temperature immediately after discharge is, for example, 140, 141, 142, 143, 144, 145, 146, 147, 148, 149, 150°C, and may be in the range between the two values exemplified herein.

The temperature of the chip containing the chloroprene-based polymer rubber after 60 seconds of discharge is preferably 130° C or lower. The temperature 60 seconds after discharge is, for example, 50, 60, 70, 80, 90, 100, 110, 120, 130°C, and may be in the range between the two values exemplified herein.

Here, the temperature of the chip containing the chloroprene-based polymer rubber immediately after discharge and the temperature 60 seconds after discharge can be determined using a contact thermometer.

By controlling the temperature immediately after discharge and the temperature 60 seconds after discharge to equal to or less than the above upper limit, changes in the properties of the chloroprene-based polymer rubber due to heat can be suppressed, the chip, by which an adhesive composition that has excellent brushability and layer separation resistance and little coloring adhesive composition can be obtained, can be easily obtained.

The temperature immediately after discharge and the temperature 60 seconds after discharge can be controlled by adjusting conditions such as die head temperature, discharge amount, number of cutting blades/rotation speed, die shape, and the like. in the molding step.

In the molding step according to one embodiment of the present invention, the temperature of the die head is preferably 120°C or lower. The temperature of the die head is, for example, 100, 105, 110, 115, 120° C, and may be within the range between any two of the numerical values exemplified here.

As one example, in the molding step according to one embodiment of the present invention, the discharge rate of the composition containing the chloroprene-based polymer rubber can be 15 to 35 kg/h, and specifically, for example, 15, 20, 25, 30, 35 kg/h, and may be within the range between any two of the numerical values exemplified here.

As one example, in the molding step according to one embodiment of the present invention, the discharge rate of the composition containing the chloroprene-based polymer rubber can be set to 1200 to 2800 mm/min. The discharge rate may be, for example,1200, 1300, 1400, 1500, 1600, 1700, 1800, 1900, 2000, 2100, 2200, 2300, 2400, 2500, 2600, 2700, 2800 mm/min, and may be within the range between any two of the numerical values exemplified here.

Further, as one example, in the molding step according to one embodiment of the present invention, the shape of the die can be set to have a diameter of 5 to 25 mm. Specifically, the diameter is, for example, 5, 10, 15, 20, 25 mm and may be within the range between any two of the numerical values exemplified here.

The die can have 1 to 5 holes. The die may have, for example, 1, 2, 3, 4, or 5 holes, and may be within the range between any two of the numerical values exemplified here.

Further, as one example, in the molding step according to one embodiment of the present invention, the number of cutting blades can be one.

The rotation speed of the cutting blade can be 200 to 1000 rpm, specifically, for example, 200, 300, 400, 500, 600, 700, 800, 900, 1000 rpm, and may be within the range between any two of the numerical values exemplified here.

The ratio (Y/Z) of the discharge speed Y (mm/min) of the chloroprene-based polymer rubber at the die head to the rotation speed Z (rpm) of the cutting blade that cuts the discharged chloroprene-based polymer rubber is preferably 1 to 10. Specifically, Y/Z is, for example, 1, 2, 3, 4, 5, 6, 7, 8, 9, 10, and may be within the range between any two of the numerical values exemplified here.

As one example, by setting each of the above conditions within the above numerical ranges, the chip can easily have a desired thickness, and heat generation due to pressure loss at the die portion can be easily suppressed.

By setting each of the above conditions within the above numerical ranges, it is possible to more appropriately control the temperature and heat storage property of the chip after discharge, the chip can have excellent blocking resistance, and, by the chip, an adhesive composition that has excellent brushability and layer separation resistance and little coloring can be obtained.

The method for producing according to one embodiment of the present invention preferably does not include a step of water cooling the chip after the molding step. It is possible to rapidly cool the chip by including a step of water cooling the chip with water, but in that case, it is necessary to provide an additional step of removing water. The additional step of removing water may cause the chip to undergo an even longer thermal history, which is also unfavorable from the viewpoint of energy efficiency.

Since the chip according to one embodiment of the present invention has sufficiently low heat storage property, it is possible to sufficiently suppress the deterioration of the chloroprene-based polymer rubber even without the step of water cooling the chip after the molding step.

### 4. Adhesive Composition

The adhesive composition of one embodiment of the present invention contains a solution of the above chips dissolved in an organic solvent.

Since the above chips contain chloroprene-based polymer rubber whose deterioration by heat is suppressed, the resulting adhesive composition has excellent brushability and layer separation resistance, and little coloring.

The type of organic solvent is not limited, and organic solvents such as toluene, xylene, acetone, methyl ethyl ketone, n-hexane, cyclohexane, methyl cyclohexane, cyclopentane, isopropyl acetate and ethyl acetate can be used.

As the organic solvents, non-aromatic solvents such as n-hexane, cyclohexane, methylcyclohexane, acetone, methyl ethyl ketone, ethyl acetate, and butyl acetate can be used instead of aromatic solvents such as toluene, xylene, and ethylbenzene, which are causative substances of sick building syndrome. It is more preferable to dissolve the chloroprene-based polymer rubber in a mixture having only poor solvents that are poor in dissolving the chloroprene-based polymer latex alone and as one example is an organic solvent in which the ratio of cyclohexane to ethyl acetate is 1:1 (mass ratio).

The amount of the organic solvent used may be adjusted appropriately depending on the application and type of adhesive, and is not particularly limited. Since a good balance between heat-resistant adhesive strength and initial adhesive strength can be obtained, the viscosity of the adhesive composition is preferably adjusted to 3500 to 4500 mPa • S.

In addition to the solvent, the adhesive composition may contain a metal oxide, a tackifying resin, and an antioxidant. By adding these additives to the adhesive, the initial adhesive strength, normal adhesive strength, and spray coatability of the resulting adhesive can be improved.

Examples of metal oxides include zinc oxide (zinc white), aluminum oxide, titanium oxide, and magnesium oxide and the like.

As the tackifying resin, for example, a phenolic resin, a rosin resin, a coumarone resin, a petroleum resin, and the like can be used.

Examples of the antioxidant include 2,2'-methylenebis(4-ethyl-6-t-butylphenol), 2,2'-methylenebis(4-methyl-6-t-butylphenol), 2,6-di-t-butyl-4-methylphenol, pentaerythritol tetrakis [3-(3,5-di-t-butyl-4-hydroxyphenyl) propionate], thiodiethylenebis[3-(3,5-di-t-butyl-4-hydroxyphenyl)propionate], octadecyl-3-(3,5-di-t-butyl-4-hydroxyphenyl)propionate, N,N'-hexane-1,6-diylbis-3-(3,5-di-t-butyl-4-hydroxyphenylpropionamide), 3,5-bis(1,1-dimethylethyl)-4-hydroxyalkyl ester, diethyl [{3,5-bis(1,1-dimethylethyl)-4-hydroxyphenyl}methyl]phosphonate, 3,3' ,3" ,5,5' ,5" -hexa-t-butyl-a,a' ,a" -(mesitylene-2,4,6-triyl)tri-p-cresol, ethylenebis(oxyethylene)bis[3-(5-t-butyl-4-hydroxy-m-tolyl)propionate], tetraethylthiuram disulfide, tetrabutylthiuram disulfide, tetramethylthiuram monosulfide, dibutylhydroxytoluene and the like.

The adhesive composition may further contain a formaldehyde catcher, fillers, and the like, depending on desired physical properties.

Examples of the formaldehyde catcher include pyrrolidine, piperidine, piperazine, morpholine, melamine, dicyandiamide, urea, ethyleneurea, 4,5-dimethoxyethyleneurea, propyleneurea, 5-methylpropyleneurea, 5-hydroxypropyleneurea, 5-methoxypropylene urea, oxalyl urea (parabanic acid), hydrazobenzothiazole, semicarbazide, thiosemicarbazide. The formaldehyde catcher agent can trap formaldehyde, a harmful volatile substance.

Examples of the fillers used include talc, calcium carbonate, clay, smectite, silica, hydrotalcite, mica, and the like.

For the purpose of improving light resistance, an ultraviolet absorber such as benzotriazole or a light stabilizer such as hindered amine may be added to the adhesive composition.

The adhesive composition according to one embodiment also may contains at least one raw rubber selected from the group consisting of a natural rubber, an isoprene rubber, a butyl rubber, a nitrile rubber, a hydrogenated nitrile rubber, a butadiene rubber, a styrene-butadiene rubber and an ethylene-propylene rubber (uncrosslinked or unvulcanized rubber).

The method of producing the adhesive composition is not particularly limited, and known machines and devices may be used. As the method of producing the adhesive composition, in general, a method of dissolving an alkylphenol resin and magnesium oxide in an organic solvent, then allowing the solution stand at room temperature for 10 to 20 hours and dissolving the chip including the chloroprene-based polymer rubber, a metal oxide, an antioxidant into the solution can be used.

The adhesive composition according to one embodiment of the present invention is used as an adhesive or a raw material for an adhesive. For example, an adhesive can be obtained by adding other additives to the adhesive composition or mixing the adhesive composition with another adhesive composition. The adhesive is preferably used for joining and adhering the same or different types of material such as paper, wood, cloth, leather, rubber, plastic, foam, pottery, glass, mortar, cement-based materials, ceramics, metals, and the like.

When the adhesive composition according to one embodiment of the present invention is placed in a glass container after preparation and stored in a thermostatic chamber at 60°C under light-shielded conditions, it is preferable that the layer separation is not observed even after 6 weeks, and it is more preferable that the layer separation is not observed even after 7 weeks.

### EXAMPLES

The invention is described in more detail below based on Examples, but the invention is not to be construed as limited thereto.

### (Example 1)

### <Production of Chloroprene-based Polymer Latex>

Using a reactor with an internal volume of 5 liters, 3.3 parts by mass of disproportionated gum rosin acid sodium salt 3R-70N (manufactured by Arakawa Chemical Industry Co., Ltd.), 0.5 parts by mass of disproportionated tall rosin acid sodium salt 6R-70N (manufactured by Harima Chemicals Group, Inc.), 0.4 parts by mass of sodium salt of a condensate of naphthalene sulfonic acid and formaldehyde (product name Demol N: manufactured by Kao Corporation), 0.5 parts by mass of sodium hydrogen sulfite, 0.0003 parts by mass of thiourea dioxide, and 0.3 parts by mass of sodium hydroxide were added to 110 parts by mass of pure water under a nitrogen atmosphere. After 100 parts by mass of chloroprene monomer and 0.15 parts by mass of n-dodecyl mercaptan were added to this solution and emulsified, potassium persulfate was added as a polymerization initiator, and polymerization was carried out under a nitrogen stream at a polymerization temperature of 10°C. When the polymerization conversion rate reached 72% or more, a phenothiazine emulsion was added as a polymerization terminator to terminate the reaction. Unreacted monomers were removed under reduced pressure to obtain chloroprene-based polymer latex 1 with a solid content of 40%.

### <Production of Chip Containing Chloroprene-based Polymer Rubber>

Chips containing the chloroprene-based polymer rubber were produced from the chloroprene-based polymer latex. The obtained chloroprene-based polymer latex 1 and a coagulant (calcium chloride 1%, acetic acid 0.6% aqueous solution) were supplied to a twin-screw extruder and mixed with a screw to coagulate the chloroprene-based polymer latex. Thereafter, the obtained coagulate was dehydrated, washed, and dried to obtain a chloroprene-based polymer rubber. Thereafter, the obtained chloroprene-based polymer rubber was formed into chips by a molding step using a side hot cut. The above-mentioned coagulating, dehydrating, washing, drying, and molding (extrusion into rod shapes) steps were carried out in the twin-screw extruder.

The production conditions for the above steps are shown below.
Equipment: Twin screw extruder (screw outer diameter: 47mm, L/D: 59.5)
Dice shape: (Φ15mm x 1 hole)
Number of cutting blades: 1
Conditions: Screw rotation speed: 85 rpm
Latex supply amount: 75kg/h
Coagulant supply amount: 50kg/h
Drying step temperature
   First half: 120°C x 2 minutes
   Second half: 60°C x 3 minutes
Die head temperature: 110°C
Rubber discharge amount: 26kg/h
Discharge speed: 2130mm/min
Cutting blade rotation speed: 600 rpm

### (Example 2)

Chips were produced in the same manner as in Example 1, except that the rotation speed of the cutting blade was set to 360 rpm in the method for producing chip.

### (Example 3)

Chips were produced in the same manner as in Example 1, except that the rotation speed of the cutting blade was set to 900 rpm in the method for producing chip.

### (Example 4)

### <Production of chloroprene-based polymer latex>

Polymerization was carried out under the same conditions as in Example 1 except that the polymerization temperature was 35°C, and unreacted monomers were removed under reduced pressure to obtain chloroprene-based polymer latex 4 with a solid content of 40%.

### <Production of Chip Containing chloroprene-based polymer rubber>

Chips were produced in the same manner as in Example 1 except that chloroprene-based polymer latex 4 was used.

### (Comparative Example 1)

### <Production of Chip Containing chloroprene-based polymer rubber>

Chips were produced in the same manner as in Example 1, except that the rotation speed of the cutting blade was set to 150 rpm in the method for producing chip.

### (Comparative Example 2)

### <Production of chloroprene-based polymer latex>

Polymerization was carried out under the same conditions as in Example 1, except that the chloroprene monomer was 97.5 parts by mass, 2,3-dichloro-1,3-butadiene was 2.5 parts by mass, and the polymerization temperature was 40°C. Unreacted monomers were removed under reduced pressure to obtain chloroprene-based polymer latex 6 with a solid content of 40%.

### <Production of Chip Containing chloroprene-based polymer rubber>

Chips were produced in the same manner as in Example 1 except that chloroprene-based polymer latex 6 was used.

### <Chip Evaluation>

The resulting chips were evaluated as follows.

### <Heat Storage Property>

The heat storage property of the chips was evaluated using the following procedure.

First, a K-type thermocouple was inserted into the chip so that the tip of the thermocouple was near the center of the chip, and the chip was placed in an oven set at 150°C and heated until the temperature near the center reached 140°C. After the temperature near the center of the chip reached 140°C, the chip was taken out into an environment at 23° C, and the temperature near the center of the chip was measured over time. During this time, the chip was held in the air so that the surface of the chip did not come into contact with other objects. Table 1 shows the temperatures immediately after, 10 seconds, 30 seconds, and 60 seconds after the chip was taken out in a 23°C environment.

### <Chip Shape>

The thickness, major axis, and minor axis of the chip were measured using calipers. The chip had a scale shape, and the direction perpendicular to the planes that were substantially parallel to each other was defined as the thickness direction. The maximum length of the plane perpendicular to the thickness direction was defined as the major axis, and the length perpendicular to the major axis was defined as the minor axis. The measurement results are shown in Table 1.

### <Crystallization Time>

The obtained chips were processed into a sheet shape with a thickness of 3 mm using an 8-inch diameter roll (surface temperature: 30°C). Three of these sheets were stacked in a mold of 6 mm deep x 130 mm long x 25 mm wide so that the long direction was the grain direction of the roll ("the grain direction of the roll" refers to the direction along the circumference of the roll when the chips were processed into a sheet shape with a roll) and pressed at 70°C for 20 minutes. During pressurization, bumping was carried out 5 times to remove air. The sample taken out from the mold was left for one hour in a 23°C environment and, immediately after allowed to stand for one hour, the hardness was measured using a Type A durometer based on JIS K 6253-3. The Type A durometer hardness at this time is defined as A₀. Here, A₀ indicates the hardness before being placed in a -10°C environment.

After measuring the Type A durometer hardness, the sample was placed in a -10°C low temperature thermostatic chamber. The hardness of the samples was measured using a Type A durometer in the low temperature thermostatic chamber at regular intervals. The Type A durometer hardness X minutes after placing was defined as A_{X}, and the time required for A_{X} to exceed A₀+20 was defined as crystallization time. The measurement results are shown in Table 1.

The hardness measurement using the durometer was carried out three times at different measurement locations, and the average value of the instantaneous values was recorded. Here, the instantaneous value indicates the hardness value at the moment when the durometer needle was pressed against the sample.

### <Liquid Level Height in Glass Tube When Toluene Solution is Stirred>

17 g of chips were added to 153 g of toluene and stirred to completely dissolve the chips to obtain a 10% toluene solution of chloroprene-based polymer rubber. The 10% toluene solution of chloroprene-based polymer rubber adjusted to 20°C was placed in a beaker, and a transparent glass tube with an inner diameter of 6 mm and an outer diameter of 8 mm was put 30 mm into the toluene solution and rotated at 2000 rpm for 30 seconds. The lowest liquid level height on the outside of the glass tube is defined as H₀ and the highest liquid level height on the inside of the glass tube is defined as H₁, and the difference between lowest liquid level height on the outside of the glass tube H₀ and the highest liquid level height on the inside of the glass tube H₁ was measured with a caliper. The results are shown in Table 1.

### <Layer Separation Resistance of Adhesive>

50 parts by mass of an alkylphenol resin (TAMANOL 526, manufactured by ARAKAWA CHEMICAL INDUSTRIES, LTD.) and 3 parts by mass of magnesium oxide (KyowaMag #150, manufactured by Kyowa Chemical Industry Co., Ltd.) were dissolved in 100 parts by mass of cyclohexane, and a chelation reaction was carried out at room temperature for 16 hours. Next, to the cyclohexane solution, 100 parts by mass of the chips, 1 part by mass of 2,6-di-t-butyl-4-methylphenol (Nocrac 200: manufactured by OUCHI SHINKO CHEMICAL INDUSTRIAL CO., LTD.), and 3 parts by mass of magnesium oxide, 1 part by mass of zinc oxide, 180 parts by mass of cyclohexane, 75 parts by mass of n-hexane, 120 parts by mass of acetone, and 55 parts by mass of isopropyl acetate were added and the mixure was stirred until the chips containing the chloroprene-based polymer rubber were completely dissolved to obtaine an adhesive composition.

The obtained adhesive composition was placed in a glass container and stored in a thermostatic chamber at 60°C under light-shielded conditions. The appearance of the adhesive composition was observed for 8 weeks, and the week in which separation of the components was observed was recorded. The results are shown in Table 1.

### <Yellowness>

The chip was dissolved in toluene to a concentration of 5% by mass, and the absorbance at a wavelength of 440 nm was measured using a "Spectrophotometer UV-2600" manufactured by Shimadzu Corporation to evaluate the hue (yellowness). The results are shown in Table 1.

### <Solubility in Organic Solvent>

100 g of chips were added to 400 g of an organic solvent (cyclohexane/ethyl acetate = 1/1 (mass ratio)), and the mixture was mixed with a stirrer at 23°C, and the time until the polymer was completely dissolved was measured. Completion of dissolution was determined visually. The results are shown in Table 1.

### <Blocking Resistance>

The chips were processed into a sheet with a thickness of 3 mm using an 8-inch diameter roll (surface temperature: 30°C). This sheet was placed in a mold of 2 mm deep x 150 mm long x 100 mm wide so that the long direction was the grain direction of the roll and pressed at 70°C for 20 minutes. Two test pieces of 60 mm x 60 mm were taken from the produced sheet. A stack of two test pieces was sandwiched between glass plates having 2 mm thick x 100 mm wide x 100 mm long, and kept in a thermostatic chamber at 40°C for 1 hour. After taking it out and leaving it in a standard state (23°C) for 30 minutes, the two test pieces were peeled off, and the presence or absence of blocking (sticking) between the test pieces when peeled off was examined, and evaluation was made using the following evaluation criteria.

### (Blocking of test piece)

A: There was no blocking between the test pieces.
B: The test pieces slightly blocked each other.
C: The test pieces significantly blocked each other.

### <Total Content of Alkaline Earth Metals, Magnesium, Aluminum and Zinc>

Regarding the chip of Example 1, the contents of alkaline earth metals, magnesium, aluminum, and zinc were measured by high frequency inductively coupled plasma optical emission spectroscopy (ICP-OES). Specifically, first, the chip was cut into pieces of 5 mm square or less using scissors. 0.5 g of the cut sample was weighed out, 8 mL of nitric acid was added, and the sample was decomposed and dissolved using a microwave decomposition device. After the obtained decomposition liquid was cooled, the volume was adjusted to 25 mL and measured using a high frequency inductively coupled plasma emission spectrometer. It was confirmed that the chip of Example 1 contained 790 mg/kg of calcium.

**[Table 1]**

| Table 1 | | | Example 1 | Example 2 | Example 3 | Example 4 | Comparative Example 1 | Comparative Example 2 |
|---|---|---|---|---|---|---|---|---|
| Crystallization time | Time required for Type A durometer hardness to increase by 20 in an environment of -10°C | min | 4.2 | 4.2 | 4.2 | 142.5 | 4.2 | 707.1 |
| Chip shape | Thickness | mm | 3 | 5 | 2 | 3 | 12 | 3 |
| | Major axis | mm | 35 | 35 | 35 | 35 | 53 | 35 |
| | Minor axis | mm | 18 | 18 | 18 | 18 | 24 | 18 |
| Heat storage property | Immediately After Chip is Taken out | °C | 140 | 140 | 140 | 140 | 140 | 140 |
| | After 10 seconds | °C | 131.8 | 137.8 | 125.3 | 131.4 | 140 | 131.6 |
| | After 30 seconds | °C | 118.3 | 134.1 | 105.4 | 118.6 | 139.8 | 118.4 |
| | After 60 seconds | °C | 100.1 | 128.9 | 80.5 | 100.8 | 138.6 | 100.5 |
| Liquid level height in glass tube when toluene solution is stirred | | mm | 5.8 | 6.8 | 5.4 | 5.6 | 13.8 | 5.7 |
| Layer separation resistance | | week | 6 | 7 | 6 | 8 | 8 | 6 |
| Yellowness | | - | 0.08 | 0.12 | 0.05 | 0.11 | 0.45 | 0.09 |
| Solubility in organic solvent | | min | 150 | 250 | 100 | 140 | 600 | 130 |
| Blocking resistance | | - | A | A | A | B | A | C |

### REFERENCE LIST

1 Glass tube
2 the highest liquid level height on the inside of the glass tube H₁
3 the lowest liquid level height on the outside of the glass tube H₀

## Claims

1. A chip for an adhesive composition, comprising a chloroprene-based polymer rubber, wherein:
a temperature near a center of the chip 60 seconds after the chip heated to 140°C is kept in a room at 23°C is less than 130°C;
time required for A_{X} to exceed A₀ + 20 is less than 500 minutes;
A₀ is a Type A durometer hardness measured in accordance with JIS K 6253-3 of a 6 mm thickness sheet, prepared by press molding the chip at 70°C, taken out from a mold and allowed to stand for 1 hour in a 23°C environment;
A_{X} is a Type A durometer hardness after X minutes of placing the 6 mm thick sheet in a thermostatic chamber at -10°C.

2. The chip of Claim 1, wherein:
when a toluene solution of 10% by mass of the chloroprene-based polymer rubber is prepared by dissolving the chip in toluene, a glass tube with an inner diameter of 6 mm and an outer diameter of 8 mm is put 30 mm into the toluene solution of 10% by mass of the chloroprene-based polymer rubber adjusted to 20°C and the toluene solution is stirred with the glass tube at 2000 rpm for 30 seconds, difference between H₀ and H₁ is 10 mm or less;
H₁ is the highest liquid level height on the inside of the glass tube; and
H₀ is the lowest liquid level height on the outside of the glass tube.

3. The chip of Claim 1 or Claim 2, wherein when a toluene solution of 5% by mass of the chloroprene-based polymer rubber is prepared by dissolving the chip in toluene, an absorbance of the toluene solution of 5% by mass of the chloroprene-based polymer rubber at a wavelength of 440 nm is less than 0.30.

4. The chip of any one of Claims 1 to 3, wherein when 100 g of the chip is dissolved in 400 g of an organic solvent that is cyclohexane: ethyl acetate = 1:1 (mass ratio) at 23°C, the time until 100g of the chip dissolves in the organic solvent is 300 minutes or less.

5. The chip of any one of Claims 1 to 4, wherein a total content of alkaline earth metals, magnesium, aluminum and zinc in the chip is 1 to 5000 mg/kg.

6. A method for producing the chip of any one of Claims 1 to 5, comprising a separation step and a molding step, wherein:
in the separation step, by adding a coagulant to a chloroprene-based polymer latex containing the chloroprene-based polymer rubber, the chloroprene-based polymer rubber is separated from the chloroprene-based polymer latex to obtain a composition containing the chloroprene-based polymer rubber;
in the molding step, the composition containing the chloroprene-based polymer rubber is molded by an extruder to obtain the chip containing the chloroprene-based polymer rubber,
in the molding step, the temperature of the chip containing the chloroprene-based polymer rubber immediately after discharge is less than 150°C.

7. The method for producing of Claim 6, wherein in the molding step, a temperature of the chip containing the chloroprene-based polymer rubber after 60 seconds of discharge is 130°C or less.

8. The method for producing of Claim 6 or 7, wherein:
in the molding step, a temperature of a die head is set to 120°C or less;
Y/Z is set to 1 to 10;
Y is a discharge speed of the chloroprene-based polymer rubber at the die head (mm/min); and
Z is a rotation speed of a cutting blade that cuts the chloroprene-based polymer rubber to be discharged.

9. The method for producing of any one of Claims 6 to 8, wherein the method does not include a water cooling step of the chip after the molding step.

10. The method for producing of any one of Claims 6 to 9, further comprising a drying step, wherein in the drying step, water is removed from the composition containing the chloroprene-based polymer rubber separated in the separation step, and the atmospheric temperature in the drying step is 130°C or less.

11. The method for producing of Claim 10, wherein the separation step, the drying step, and the molding step are carried out in the extruder.

12. An adhesive composition containing a solution of the chip of any one of Claims 1 to 5 dissolved in an organic solvent.

## Patentansprüche

1. Chip für eine Klebstoffzusammensetzung, umfassend einen Polymerkautschuk auf Chloroprenbasis, wobei:
eine Temperatur in der Nähe der Mitte des Chips 60 Sekunden, nachdem der auf 140 °C erhitzte Chip in einem Raum mit 23 °C aufbewahrt wird, weniger als 130 °C beträgt;
eine Zeit, die erforderlich ist, damit A_{X} A₀ + 20 übersteigt, weniger als 500 Minuten beträgt;
A₀ eine gemäß JIS K 6253-3 gemessene Durometerhärte des Typs A einer 6 mm dicken Platte ist, die durch Pressformen des Chips bei 70 °C hergestellt, aus einer Form entnommen und 1 Stunde lang in einer Umgebung mit 23 °C stehengelassen wurde;
A_{X} eine Durometerhärte vom Typ A nach X Minuten des Platzierens der 6 mm dicken Platte in einer Thermostatkammer bei -10 °C ist.

2. Chip nach Anspruch 1, wobei:
wenn eine Toluollösung von 10 Masse-% des Polymerkautschuks auf Chloroprenbasis durch Lösen des Chips in Toluol hergestellt wird, ein Glasrohr mit einem Innendurchmesser von 6 mm und einem Außendurchmesser von 8 mm 30 mm tief in die auf 20 °C eingestellte Toluollösung von 10 Masse-% des Polymerkautschuks auf Chloroprenbasis eingeführt wird und die Toluollösung mit dem Glasrohr 30 Sekunden lang bei 2000 U/min gerührt wird, die Differenz zwischen H₀ und H₁ 10 mm oder weniger beträgt;
H₁ die höchste Flüssigkeitsstandshöhe auf der Innenseite des Glasrohrs ist; und
H₀ die niedrigste Flüssigkeitsstandshöhe auf der Außenseite des Glasrohrs ist.

3. Chip nach Anspruch 1 oder Anspruch 2, wobei, wenn eine Toluollösung von 5 Masse-% des Polymerkautschuks auf Chloroprenbasis durch Lösen des Chips in Toluol hergestellt wird, eine Absorbanz der Toluollösung von 5 Masse-% des Polymerkautschuks auf Chloroprenbasis bei einer Wellenlänge von 440 nm weniger als 0,30 beträgt.

4. Chip nach einem der Ansprüche 1 bis 3, wobei, wenn 100 g des Chips in 400 g eines organischen Lösungsmittels, bei dem es sich um Cyclohexan : Ethylacetat = 1:1 (Massenverhältnis) handelt, bei 23 °C gelöst werden, eine Zeit, bis sich 100 g des Chips in dem organischen Lösungsmittel lösen, 300 Minuten oder weniger beträgt.

5. Chip nach einem der Ansprüche 1 bis 4, wobei ein Gesamtgehalt an Erdalkalimetallen, Magnesium, Aluminium und Zink in dem Chip 1 bis 5000 mg/kg beträgt.

6. Verfahren zum Herstellen des Chips nach einem der Ansprüche 1 bis 5, umfassend einen Trennungsschritt und einen Formungsschritt, wobei:
in dem Trennungsschritt durch Zugeben eines Koagulans zu einem Polymerlatex auf Chloroprenbasis, der den Polymerkautschuk auf Chloroprenbasis enthält, der Polymerkautschuk auf Chloroprenbasis von dem Polymerlatex auf Chloroprenbasis getrennt wird, um eine Zusammensetzung zu erhalten, die den Polymerkautschuk auf Chloroprenbasis enthält;
in dem Formungsschritt die Zusammensetzung, die den Polymerkautschuk auf Chloroprenbasis enthält, durch einen Extruder geformt wird, um den Chip zu erhalten, der den Polymerkautschuk auf Chloroprenbasis enthält,
in dem Formungsschritt die Temperatur des Chips, der den Polymerkautschuk auf Chloroprenbasis enthält, unmittelbar nach dem Austritt weniger als 150 °C beträgt.

7. Verfahren zum Herstellen nach Anspruch 6, wobei im Formungsschritt eine Temperatur des Chips, der den Polymerkautschuk auf Chloroprenbasis enthält, nach 60 Sekunden seit dem Austritt 130 °C oder weniger beträgt.

8. Verfahren zum Herstellen nach Anspruch 6 oder 7, wobei:
in dem Formungsschritt eine Temperatur eines Spritzkopfes auf 120°C oder weniger eingestellt wird;
Y/Z auf 1 bis 10 eingestellt wird;
Y eine Austrittsgeschwindigkeit (mm/min) des Polymerkautschuks auf Chloroprenbasis am Spritzkopf ist; und
Z eine Rotationsgeschwindigkeit eines Schneidmessers ist, das den austretenden Polymerkautschuk auf Chloroprenbasis schneidet.

9. Verfahren zum Herstellen nach einem der Ansprüche 6 bis 8, wobei das Verfahren keinen Wasserkühlungsschritt des Chips nach dem Formungsschritt beinhaltet.

10. Verfahren zum Herstellen nach einem der Ansprüche 6 bis 9, ferner umfassend einen Trocknungsschritt, wobei in dem Trocknungsschritt Wasser aus der Zusammensetzung, die den im Trennungsschritt abgetrennten Polymerkautschuk auf Chloroprenbasis enthält, entfernt wird und die Umgebungstemperatur im Trocknungsschritt 130 °C oder weniger beträgt.

11. Verfahren zum Herstellen nach Anspruch 10, wobei der Trennungsschritt, der Trocknungsschritt und der Formungsschritt in dem Extruder durchgeführt werden.

12. Klebstoffzusammensetzung, die eine Lösung des Chips nach einem der Ansprüche 1 bis 5 enthält, der in einem organischen Lösungsmittel gelöst ist.

## Revendications

1. Puce pour une composition adhésive comprenant un caoutchouc polymère à base de chloroprène, dans laquelle :
une température près d'un centre de la puce, 60 secondes après que la puce est chauffée à 140 °C, a été maintenue dans une pièce à 23 °C, est inférieure à 130 °C ;
le temps nécessaire pour que A_{X} dépasse A₀ + 20 est inférieur à 500 minutes ;
A₀ est une dureté au duromètre de type A mesurée conformément à la norme JIS K 6253-3 d'une feuille de 6 mm d'épaisseur, préparée par moulage par compression de la puce à 70 °C, démoulée et laissée reposer pendant 1 heure dans un environnement à 23 °C ;
A_{X} est une dureté au duromètre de type A après X minutes de placement de la feuille de 6 mm d'épaisseur dans une chambre thermostatique à -10 °C.

2. Puce de la revendication 1, dans laquelle :
lorsqu'une solution de toluène contenant 10 % en masse de caoutchouc polymère à base de chloroprène est préparée en dissolvant la puce dans le toluène, un tube de verre d'un diamètre intérieur de 6 mm et d'un diamètre extérieur de 8 mm est placé à 30 mm dans la solution de toluène contenant 10 % en masse de caoutchouc polymère à base de chloroprène ajustée à 20°C et la solution de toluène est agitée avec le tube de verre à 2000 tr/min pendant 30 secondes, la différence entre H₀ et H₁ étant inférieure ou égale à 10 mm ;
H₁ est la hauteur du niveau de liquide le plus élevé à l'intérieur du tube de verre ; et
H₀ est la hauteur du niveau de liquide le plus bas à l'extérieur du tube de verre.

3. Puce de la revendication 1 ou de la revendication 2, dans laquelle, lorsqu'une solution de toluène de 5 % en masse de caoutchouc polymère à base de chloroprène est préparée en dissolvant la puce dans le toluène, une absorbance de la solution de toluène de 5 % en masse de caoutchouc polymère à base de chloroprène à une longueur d'onde de 440 nm est inférieure à 0,30.

4. Puce de l'une quelconque des revendications 1 à 3, dans laquelle lorsque 100 g de la puce sont dissous dans 400 g d'un solvant organique qui est cyclohexane : acétate d'éthyle = 1: 1 (rapport de masse) au niveau de 23 °C, le temps jusqu'à ce que 100 g de la puce se dissolve dans le solvant organique est de 300 minutes ou moins.

5. Puce de l'une quelconque des revendications 1 à 4, dans laquelle une teneur totale en métaux alcalino-terreux, magnésium, aluminium et zinc dans la puce est de 1 à 5000 mg/kg.

6. Procédé de fabrication de la puce de l'une quelconque des revendications 1 à 5, comprenant une étape de séparation et une étape de moulage, dans lequel :
dans l'étape de séparation, en ajoutant un coagulant à un latex polymère à base de chloroprène contenant le caoutchouc polymère à base de chloroprène, le caoutchouc polymère à base de chloroprène est séparé du latex polymère à base de chloroprène pour obtenir une composition contenant le caoutchouc polymère à base de chloroprène ;
dans l'étape de moulage, la composition contenant le caoutchouc polymère à base de chloroprène est moulée par une extrudeuse pour obtenir la puce contenant le caoutchouc polymère à base de chloroprène,
dans l'étape de moulage, la température de la puce contenant le caoutchouc polymère à base de chloroprène immédiatement après le déchargement est inférieure à 150 °C.

7. Procédé de fabrication de la revendication 6, dans lequel, dans l'étape de moulage, une température de la puce contenant le caoutchouc polymère à base de chloroprène après 60 secondes de décharge est inférieure ou égale à 130 °C.

8. Procédé de fabrication de la revendication 6 ou 7, dans lequel :
dans l'étape de moulage, la température d'une tête de filière est réglée à 120 °C ou moins ;
Y/Z est réglé sur 1 à 10 ;
Y est une vitesse de décharge du caoutchouc polymère à base de chloroprène au niveau de la tête de filière (mm/min) ; et
Z est la vitesse de rotation d'une lame coupante qui coupe le caoutchouc polymère à base de chloroprène à décharger.

9. Procédé de fabrication de l'une quelconque des revendications 6 à 8, dans lequel le procédé ne comprend pas d'étape de refroidissement à l'eau de la puce après l'étape de moulage.

10. Procédé de fabrication de l'une quelconque des revendications 6 à 9, comprenant en outre une étape de séchage, dans laquelle, lors de l'étape de séchage, l'eau est éliminée de la composition contenant le caoutchouc polymère à base de chloroprène séparé dans l'étape de séparation, et la température atmosphérique dans l'étape de séchage est inférieure ou égale à 130 °C.

11. Procédé de fabrication de la revendication 10, dans lequel l'étape de séparation, l'étape de séchage et l'étape de moulage sont réalisées dans l'extrudeuse.

12. Composition adhésive contenant une solution de la puce de l'une quelconque des revendications 1 à 5 dissoute dans un solvant organique.
